# EUROPEAN PATENT APPLICATION

(11) **EP 0 886 365 A1**
(43) Date of publication of application: **23.12.1998**
(21) Application number: 98304901.6
(22) Date of filing: 22.06.1998
(51) Int. Cl.: H02K 5/173

(54) **Method of assembling electric motors with ball bearings to minimize preload variation**

(30) Priority: 20.06.1997 US 879868
(71) Applicant: A.O. Smith Corporation, Milwaukee, Wisconsin 53224 (US)
(72) Inventor: Hasbargen, Michael, West Lafayette, IN 47906 (US)
(74) Representative: Carpenter, David

(57) **Abstract**

A fractional or sub-fractional horse power electric motor is constructed with a controlled amount of preload by first placing a sleeve over the drive end of a rotor drive shaft to fix the position of a ball bearing on that end. Then, either an adhesive or a silicon rubber sleeve is placed in each of the end caps. Next, a wave spring is placed on the adhesive or rubber sleeve in one end cap and then a ball bearing is pressed into the end cap. The ball bearing is fitted over the rear end of the drive shaft and drawn up by suitable tie bolts. The wave spring preloads the ball bearings in order to establish the proper operating condition.

## Description

### Background of the Invention

This invention relates to means for and methods of assembling electrical motors and, more particularly, to provide a means for precisely controlling ball bearing preloading in motors, especially fractional and sub-fractional motors.

Electrical motors have rotors mounted on ball bearings in order to turn within stators. The amount of axial and radial movement of the balls within the inner and outer races of the ball bearing is reduced by an application of a preload force, usually axially, transmitted by a spring.

Achieving a reasonably consistent ball bearing preload is essential for minimizing bearing noise and extending the life expectancy of both the motor and the bearing.

Prior art methods of designing ball bearing motors entail the establishment of nominal manufacturing dimensions and tolerances for all of the components of the motor which might have an effect upon the preload. Thereafter, the dimensions across the rotor/shaft assembly, stator assembly and brackets are calculated to determine a desired amount of preloading under the worst case conditions and when there is a combination of the most extreme limits of otherwise acceptable tolerances.

Prior methods of assembling sleeve bearing motors are shown in U.S. Patent Nos. 4,878,289; 4,944,055; and 5,051,632. However, a sleeve bearing assembly method is not relevant to a method of assembling ball bearing motors since the tolerance of sleeve bearings is so very great as compared to the very close tolerance of the ball bearings. Sleeve bearing-equipped motors are associated with the technical term "endplay" since a considerable amount of endplay is necessary for acceptable operation of a sleeve bearing motor. However, the word "endplay," does not exist in the ball bearing design vocabulary. The minimal amount of play necessarily manufactured into ball bearings is known as "axial or radial play" and is measured in ten-thousandths of an inch.

In an electric motor, the stator of the motor field assembly is the component which may have the greatest variations in tolerance since the stator is formed from a stack or series of laminates, each of which has a tolerance variation of its own. Therefore, the tolerance of the stator is the sum of the tolerances of all of the individual laminates which are stacked one on the other and then fastened together in order to form the stator. Of course, the tightness of the fastened stack also has an effect upon the total thickness tolerance. Hence, the prior art has found it extremely difficult to form a stator having a thickness tolerance of less than one-half of the thickness of a laminate. This variation in the tolerance of the stator has been the cause of the greatest variance in the ball bearing preload in motors because the bearing supports are mounted on the stator.

In this respect, it has not been uncommon for electric motors within a single production lot to exhibit considerable preload variation. Therefore, there is a need to provide better manufacturing means for and methods of reducing the preload variance of ball bearing electric motors and, more particularly, of fractional and sub-fractional motors.

In the past, motor manufacturers have resorted to a wide variety of assembly processes to obtain an optimum cost effective method. One practice of the prior art has been to measure the thickness of the completed stator rather than to count the laminations. Then, the rotor is selected to fit those measurements.

In U.S. Patent No. 5,051,632, describing a sleeve bearing design spacer and retainer which are constructed to telescope somewhat. Therefore, each individual stator could be used as its own custom gauge so that the dimension over spacers would telescope to a length which matched the needs of that particular stator. This assembly process reduces the sleeve bearing component tolerance problems of the laminate stackup by using the stator or motor field assembly as an integral part of an assembly fixture. However, realistically, the same procedures can not be use to assemble ball bearing motors.

The traditional means of assembling ball bearings involves calculating a preload fixing wave spring "working height" that can actually exceed the free height of the spring (in other words, it is not compressed at all); or, at the opposite extreme, the calculation might lead to a negative value indicating something beyond a total spring collapse due to a compression of the spring. For this reason, the prior art has used a rather lengthy coil spring with its generous working range and has not been able to use a preferred wave spring.

The use of a coil spring for preloading requires an inner race slip fit on at least one end of the motor. One bearing is inserted into each of a pair of bearing end caps or housings which are then affixed to opposite ends of the motor. The coil spring provides a light axial force for removing the clearance between the inner and outer races and the rotating ball bearings. Then, at least one ball bearing inner race is secured to the shaft by injecting an adhesive into the joint between the shaft and the inner race of the ball bearing. This is a complicated, complex and expensive manufacturing step. The other ball bearing may be pressed on the motor shaft or may also be secured with an adhesive which provides axial preload but only until the adhesive cures. After the adhesive cures, the coil spring is no longer active.

Opposite the spring end of the assembly (the drive end), a solid spacer is employed to position the other ball bearing. Since the spacer is in contact with the rotor assembly, the contact complicates the spring compression tolerance accumulation.

In keeping with an aspect of the present invention, a fractional or sub-fractional horse power electrical motor is constructed by first placing a spacer sleeve over the drive end of the drive shaft in order to fix the position of a ball bearing on that end. Then, either an adhesive or a silicon rubber sleeve is placed in each of the end caps or housings which receive the ball bearings that support the shaft. Next, a wave spring is placed on the adhesive or rubber sleeve of the end cap opposite or rear end of the drive shaft. A ball bearing is pressed into each of the end caps. The ball bearing on the drive end is fastened against the spacer sleeve. The other ball bearing is fitted over the rear end of the drive shaft and drawn up by suitable tie bolts, at which time the wave sprint preloads the rotor in order to establish the proper amount of end-play.

### Brief Description of the Drawings

A preferred embodiment of the invention is shown in the attached drawings wherein:
FIG. 1 is a perspective and exploded view of an electric motor; and
FIG. 2 is a partial cross-sectional view of the rotor and its mounts showing the inventive method.

### Detailed Description of the Preferred Embodiment

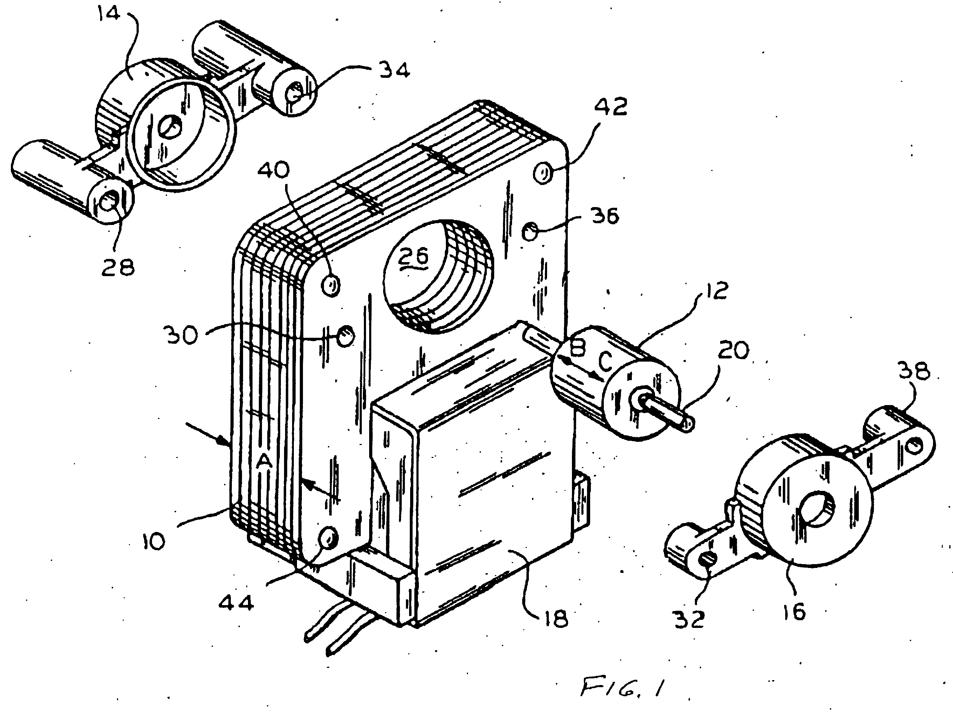

FIG. 1 shows the principal elements of an electric motor (especially a fractional or sub-fractional horsepower motor) as including a motor field assembly or stator **10**, a rotor/shaft assembly **12**, two end housings or caps **14, 16**, and a coil **18**. The rotor **12** has a central shaft **20** which is supported on its two ends by bearings mounted in the end housings or caps **14, 16.** The assembly is made by placing rotor/shaft assembly **12** in a hole **26** in the stator **10**, fitting end housings or caps **14**, **16** with their enclosed bearings onto the ends of the shaft **20** and then passing two bolts or other fasteners such as rivets (not shown) through holes **28, 30, 32** and **34, 36, 38**, respectively, to secure all parts into a completed motor.

The problem is that the thickness dimension of the entire assembly is fixed by the thickness **A** of the stator **10** since everything else in the motor is bolted to it. The stator **10** is a laminate of steel plates which are more or less tightly held together by a plurality of rivets or weldments, three of which are seen at **40, 42, 44**. Since nothing is perfect, every manufactured item must have some tolerance dimensions. Therefore, some of these steel laminate plates are thicker and some are thinner than the optimum thickness. Sometimes, the rivets **40, 42, 44** clutch the plates more tightly and sometimes more loosely. Thus, the stator thickness dimension **A** is subject to great variance.

The rotor **12** must be loose enough to turn and therefore, is subject to at least some degree of axial motion in directions **B, C**, the freedom to slide being called "axial-play." If the amount of axial-play is too great, bearing failure is accelerated and noise becomes objectionable. If the amount of axial-play is too small, there is binding and the motor shaft will not rotate. The trouble is that the limits of an acceptable amount of axial-play is less than the necessary variations in the thickness **A** of the stator **10**. Therefore, it is not possible to make a quality motor simply by inserting a rotor into a stator with no provisions for tolerance variances. As a result, the prior art has resorted to a number of "fix-it" approaches, such as hand sorting, in order to accommodate each rotor to its stator, on a more or less customized basis. This approach is expensive, leads to a great variation in performance and may cause undesirable side effects such as noise, heating or the like. These problems are solved by using each stator itself as a gauge and as its own manufacturing tool or jig in order to customize the positions of the bearings which are to be used with the particular stator.

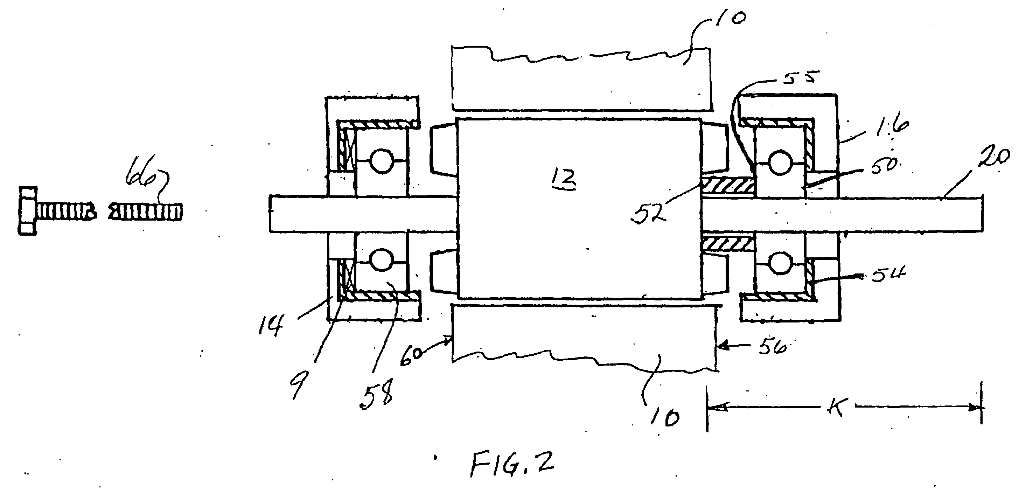

The inventive method has a solid spacer sleeve **52** (FIG. 2) inserted over the drive end of the motor shaft **12** for establishing a bearing location. It is possible to locate the drive end bearing by referencing the shaft end or by using the solid spacer between the bearing the rotor assembly. However, positioning the remaining back end bearing should be referenced to the actual stator thickness and should eliminate the majority of the stackup tolerance variations. Hence, the invention reduces six dimensional variables to only two variables, thereby making the assembly easier and at a lower overall cost.

In greater details, outer ball bearing race may be secured to the bearing housing or cap by one or a combination of the following three methods: (1) press fit; (2) slip fit with adhesive; or (3) a snug fit in a resilient silicon rubber sleeve. The following description and the claims are to be construed as being applicable to all three of these securing methods.

The motor shaft is positioned and secured to the rotor assembly **12** by referencing the distance **K** between the rotor **12** and the drive end of shaft **20**. The drive-end bearing **50** may or may not be pressed into the end housing or cap **16.** Then, the inner bearing race is pressed over the motor shaft and positioned either by inserting a "stop" spacer **52** or by referencing the bearing to the end of shaft **20.**

A resilient silicon rubber sleeve **54** may be inserted into the end housing **16**. Then, the end housing **16** and its silicon rubber sleeve **54** assembly are pressed over the bearing **50** until it is seated. Or, alternatively, an adhesive is applied to the outer surface of the outer race of the bearing and then the end housing or cap is pressed over the bearing until it is seated. The reference number **54** may identify either the adhesive or the rubber sleeve.

The combined rotor/shaft/drive end bearing assembly is then inserted into a fixture (not shown) supporting the inner race **55** of the drive bearing **50**. The motor field assembly including stator **10** is positioned over the rotor assembly.

A resilient elastomer (here silicon rubber) sleeve **54** is inserted into the rear end housing or cup **14**. Then, the end housing/silicon rubber sleeve **54** assembly is pressed over the bearing **58**. Or, adhesive is applied to the outer surface of the outer race of the bearing **58**. Then the end housing or cap **14** is pressed over the bearing. A wave spring is positioned atop the rear bearing **58**. The rear bearing **58** is pressed over the motor shaft to a defined dimension relative to the rear surface **60** of the stator **10** of the motor field assembly.

Two tie bolts **66** are then driven through holes **28, 34** (FIG. 1) in the rear end bearing housing or cap **14** and holes **30, 36**; in the motor field assembly, and then into holes **32, 38** in the drive end bearing housing **16**. If the bearing outer races are secured by adhesive instead of the resilient silicon rubber sleeve **54**, the bolts **66** are tightened as quickly as possible. The outer race press fit method cannot be employed on the rear bearing **58** (FIG 2) and end housing or cap **14** assembly since there must be at least one slip fit condition in order to apply a preload.

If the resilient silicon rubber sleeves **54** are employed in both end caps or housings, the wave spring remains somewhat active throughout the motor life since the assembly is not entirely rigid. The motor can later be at least partially disassembled if this configuration is employed. If an adhesive is employed to secure the outer race of one or both bearings, the wave spring is no longer active after curing since the assembly is rigid. The motor cannot be disassembled when an adhesive is used. In this case, the wave spring's function is to provide a preload only until the adhesive cures.

Those who are skilled in the art will readily perceive how to modify the invention. Therefore, the appended claims are to be construed to cover all equivalent structures which fall within the true scope and spirit of the invention.

## Claims

1. An electric motor having a stator with a customized and limited preload variation, said motor comprising:
a motor field assembly including a stator;
a rotor/shaft assembly positioned in said stator;
a pair of ball bearings associated with said motor field assembly for supporting opposite ends of said shaft, each of said bearings comprising an end cap for receiving and supporting an outer race of said ball bearings, fixing means interposed between said end cap and said outer race for seating said ball bearing in said end cap;
means associated with one of said end caps and its bearing for establishing a position of said ball bearing on said shaft relative to said one end of said shaft;
means associated with the other of said end caps for selectively positioning its associated ball bearing on said shaft at a position relative to taking an actual thickness of said stator on which said rotor/shaft is mounted; and
a wave spring interposed between said other end cap and its associated ball bearing for pre-loading said end cap to fix preload.

2. The motor of claim 1, wherein said fixing means comprises a resilient elastomer sleeve.

3. The motor of claim 1, wherein said fixing means is a resilient silicon rubber sleeve.

4. The motor of claim 1, wherein said fixing means is an adhesive.

5. The motor of claim 1, wherein said one end cap is on a driving end of said motor.

6. The motor of claim 1, wherein said means for establishing said position of said ball bearing on said shaft comprises a solid spacer sleeve interposed between said rotor and said ball bearing associated with said one end cap.

7. A fractional or sub-fractional electric motor comprising:
a laminated stator having a hole containing a rotor, a shaft for rotatably mounting said shaft to turn in said hole;
an end cap attached to each of opposite sides of said stator for receiving and supporting said shaft;
a ball bearing positioned in each of said end caps, one of said ball bearings in one of said end caps being positioned in a predetermined distance from said rotor;
a wave spring;
the other of said ball bearings in the other of said end caps being spring biased away from said other end cap by said wave spring; and
means comprising at least one bolt extending through said stator and both of said end caps for securing said bearing cap to said stator.

8. The motor of claim 7, wherein each of said ball bearings comprises an outer race and an inner race, and securing means positioned between an individually associated one of said end caps and an outer race of its associated bearing for securing said bearing to said associated end cap.

9. The motor of claim 8 wherein said securing means is an adhesive located between said outer race and said end cap, and said wave spring preloads said rotor to a desired position during an interval while said adhesive cures.

10. A method of assembling an electrical motor comprising the steps of:
a. assembling and securing together a plurality of laminates to form a stator, an opening being formed in said stator for receiving a rotor;
b. forming a rotor having a shaft located coaxially therein;
c. passing a solid spacer sleeve over one end of said shaft and against said rotor;
d. providing a pair of end caps each having a configuration such that they may be secured to opposite sides of said stator;
e. inserting a means into each of said end caps to secure an individually associated ball bearing therein;
f. inserting a first ball bearing into said securing means of step (e) in one of said end caps;
g. slipping said one of said end caps with said ball bearing therein over said one end of said shaft and up to said solid spacer sleeve;
h. placing a wave spring between said means inserted in step (e) and a second bearing, whereby said second ball bearing is resiliently urged toward said stator to a preloaded position; and
i. securing said end caps on opposite sides of said stator.

11. The method of claim 10, wherein said means inserted in step (e) is an adhesive and said securing means of step (I) comprises two bolts for securing said caps before said adhesive cures.

12. The method of claim 10, wherein said means inserted in step (e) is a resilient silicon rubber sleeve.
